# FASCICULE DE BREVET EUROPEEN

(11) **EP 1 060 929 B1**
(45) Date de publication et mention de la délivrance du brevet: **31.05.2006**
(21) Numéro de dépôt: 00401612.7
(22) Date de dépôt: 08.06.2000
(51) Int. Cl.: B60J 10/00, B60J 10/08

(54) **Nouvelle armature rigide pour profilé en élastomère ou plastomère et profilé équipé de cette armature.**
Starre Armierung für Profile aus Elastomer oder Plastomer und Profile mit dieser Armierung
Rigid reinforcement for elastomer or plastomer profile and profile with that reinforcement

(30) Priorité: 14.06.1999 FR 9907480
(43) Date de publication de la demande: 20.12.2000
(73) Titulaire: Metzeler Automotive Profile Systems Transieres, 92000 Nanterre (FR)
(72) Inventeur: Hardy, Françis, 76520 Boos (FR)
(74) Mandataire: Jolly, Jean-Pierre

(56) Documents cités:
- EP-A- 0 241 264
- EP-A- 0 307 304
- EP-A- 0 412 782
- EP-A- 0 614 777
- GB-A- 1 015 998
- US-A- 3 788 008

## Description

La présente invention concerne une nouvelle armature rigide pour des profilés en élastomère ou plastomère du type dit coulisse, pour encadrements de vitre coulissante d'un véhicule automobile.

On sait que de telles coulisses comprennent deux parties attenantes, à savoir une première partie à section transversale en U, qui coiffe en le pinçant un bord saillant de l'encadrement de vitre, et une seconde partie à section en U inversée par rapport à celui de la première partie, qui est destinée à guider la vitre coulissante et à la recevoir de façon étanche en position de fermeture de celle-ci, les deux parties ayant en commun une paroi latérale correspondant à une branche de chacun des U.

En vue d'assurer une bonne tenue des deux parties de ces coulisses, celles-ci comprennent généralement une armature rigide, métallique ou en une matière plastique, qui est noyée partiellement ou totalement dans l'élastomère ou le plastomère du profilé.

Certaines de ces armatures, dites "ajourées", sont découpées dans un feuillard du matériau rigide utilisé, puis conformées au profil désiré pour le profilé, avant extrusion ou coextrusion du ou des élastomères ou plastomères constituant ce profilé.

Afin que celui-ci puisse épouser fidèlement la forme de l'encadrement de porte qu'il équipe sur tout son pourtour, même si cet encadrement comporte des parties à forte courbure ou à fort rayon de courbure, une armature ajourée de ce type comporte généralement des lamelles contiguës espacées, lui permettant de se déformer aisément. De telles armatures à lamelles sont bien connues dans la technique et l'on en a proposé d'innombrables variantes, adaptées à tous les types de profilés (voir, par exemple, le brevet U.S. N° 3 165 793).

Les intervalles séparant les lamelles entraînent cependant une déformation de la surface externe du profilé, se traduisant par des ondulations alternativement en creux et en saillie, que les techniciens désignent par l'expression imagée d'aspect "en côtes de cheval" et qui donnent au profilé une apparence peu agréable au regard, notamment lorsque ces déformations sont visibles de l'extérieur.

Dans le cas des coulisses, lorsque l'on utilise une armature à lamelles, une surface présentant ces déformations et visible de l'extérieur est celle de l'aile de la partie à section en U destinée à guider la vitre coulissante, qui n'est pas contiguë à la partie formant pince et qui est tournée vers l'extérieur de la carrosserie du véhicule.

La présente invention vise à remédier à cet inconvénient en proposant une armature à lamelles, qui puisse être utilisée dans un profilé du type coulisse sans provoquer de déformations en côtes de cheval des parties de cette coulisse visibles de l'extérieur du véhicule qui en est équipé.

A cet effet, l'invention a pour premier objet une armature plane en un matériau rigide, apte à être conformée en une armature pour profilé en élastomère ou plastomère du type dit coulisse, cette armature plane ayant la forme générale d'une bande et étant caractérisée en ce qu'elle comprend :
- une partie pleine, non découpée en lamelles, contiguë à un bord longitudinal de la bande ;
- des premières lamelles espacées de façon sensiblement régulière et faisant saillie latéralement par rapport à la partie pleine, perpendiculairement au bord longitudinal de celle-ci ;
- et au moins deux secondes lamelles prolongeant latéralement chaque première lamelle perpendiculairement au bord longitudinal de la partie pleine, ces secondes lamelles étant espacées de façon sensiblement régulière les unes des autres.

L'invention a également pour objet une armature pour profilé en élastomère ou plastomère du type dit coulisse, destiné à équiper un encadrement de vitre coulissante d'un véhicule automobile, cette armature résultant d'un conformage de l'armature plane définie ci-dessus et comportant, dans un plan perpendiculaire au bord libre de la partie pleine de cette armature plane, deux parties attenantes à sections transversales en U inversées l'une par rapport à l'autre, les deux parties ayant en commun une paroi qui constitue une branche de chacun des U, cette armature étant caractérisée en ce que l'autre branche de l'un des U est constituée par la partie pleine de l'armature plane d'origine, les premières lamelles attenantes à cette partie pleine s'étendant à partir de la partie inférieure de cette branche suivant une portion au moins de la base du même U, tandis que les secondes lamelles attenantes aux premières lamelles s'étendent suivant le reste de cette base et suivant l'ensemble du second U.

L'invention a enfin pour objet un profilé du type dit coulisse, pour véhicule automobile, en élastomère ou en plastomère, dans lequel est noyée partiellement ou totalement l'armature qui vient d'être définie, ce profilé comportant deux parties attenantes à sections transversales en U inversées, ayant en commun une paroi latérale correspondant à une branche de chaque U, l'une de ces parties étant destinée à coiffer en le pinçant un bord saillant d'un encadrement de vitre coulissante du véhicule automobile, tandis que l'autre partie est destinée à guider dans ses déplacements cette vitre coulissante et à assurer l'étanchéité en position de fermeture de celle-ci, ce profilé étant caractérisé en ce qu'à la paroi latérale correspondant à la branche du U visible de l'extérieur du véhicule de la partie destinée à assurer le guidage de la vitre est associée la partie pleine de l'armature, tandis qu'à une portion au moins de la base de cette même partie sont associées les premières lamelles de l'armature, les secondes lamelles de celle-ci étant associées au reste de cette base et à la partie à section en U formant pince.

L'aile ou paroi visible de l'extérieur de la partie de la coulisse associée à la vitre coulissante comprend ainsi, noyée dans le plastomère ou l'élastomère qui la constitue, la partie pleine de l'armature et cette partie ne provoque par conséquent aucune déformation de la surface externe de cette aile.

L'armature elle-même, comme on le verra ci-après, est aussi facile à réaliser que les armatures usuelles, par simple estampage d'une bande découpée dans un feuillard, et son coût est par conséquent du même ordre de grandeur que celui des armatures usuelles.

D'autres caractéristiques et avantages de l'invention apparaîtront dans la description détaillée qui va suivre, dans laquelle on se référera aux dessins annexés, sur lesquels :
La figure 1 est une vue en plan d'une armature conforme à l'invention, avant mise en forme de celle-ci ;
La figure 2 est une coupe transversale d'une coulisse en élastomère ou plastomère équipée de l'armature de la figure 1, après mise en forme de celle-ci, le plan de coupe passant sensiblement par la ligne II-II de la figure 1.

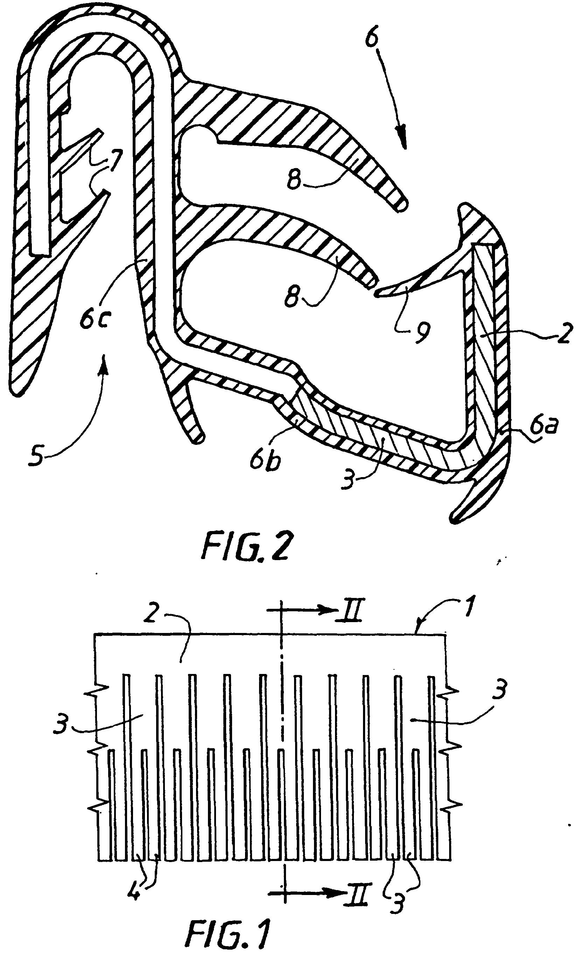

L'armature plane 1 représentée sur la figure 1 est réalisée par estampage d'une bande découpée dans un feuillard rigide, en métal ou en matière plastique.

Elle comprend une partie pleine 2, c'est-à-dire non découpée en lamelles, contiguë à un bord longitudinal de la bande et à laquelle sont attenantes latéralement des premières lamelles 3, qui font saillie à intervalles sensiblement réguliers à partir de la partie pleine 2, perpendiculairement au bord libre de celle-ci.

Chaque lamelle 3 se subdivise latéralement en deux secondes lamelles 4, également perpendiculaires au bord libre de la partie pleine 2, les différentes secondes lamelles étant espacées de façon sensiblement régulière les unes des autres.

Il est clair que la réalisation d'une telle armature par estampage ne pose aucun problème technique.

Cette armature, après mise en forme, est destinée à équiper un profilé du type dit coulisse, représenté sur la figure 2.

Ce profilé, en un élastomère ou un plastomère dans lequel est noyée l'armature 1, comprend une première partie 5 à section en U, destinée à coiffer en le pinçant un bord saillant d'un encadrement d'une vitre coulissante d'un véhicule automobile, et une second partie 6 à section en U inversée par rapport à la précédente, destinée à guider la vitre coulissante dans ses déplacements et à la recevoir de façon étanche en position de fermeture, les parties 5 et 6 étant attenantes et comportant une cloison 6c commune, correspondant à une branche de chacun des U.

Des lèvres 7 font saillie à partir d'au moins une des cloisons de la partie 5 en direction de la cloison opposée, afin de verrouiller cette partie 5 en position sur l'encadrement de vitre qu'elle équipe, tandis que des lèvres 8 et 9 font saillie respectivement à partir de chacune des parois de la partie 6 en direction de la paroi opposée, afin d'assurer l'étanchéité en position de fermeture de la vitre.

Conformément à l'invention, la partie pleine 2 de l'armature est disposée à l'intérieur de la paroi latérale 6a de la partie 6 du profilé visible de l'extérieur et, dans la mesure où cette partie pleine 2 ne comporte pas de lamelles, la surface externe de la paroi 6a ne comporte aucune déformation en côtes de cheval et présente un aspect uni, agréable au regard.

A partir de la partie inférieure de la paroi 6a, les premières lamelles 3 de l'armature s'étendent sur une partie au moins de la base 6b du U de la partie 6, afin de rigidifier celle-ci, tandis que les secondes lamelles 4 s'étendent suivant le reste de la base de la partie 6 et suivant l'ensemble de la partie 5 formant pince, de manière à pouvoir être conformées aisément au profil à forte courbure transversale de cette partie.

L'invention apporte donc une armature simple, peu coûteuse et facile à réaliser, pour équiper des profilés du type coulisse, en évitant que la partie de ces profilés visible de l'extérieur ne comporte des déformations de surface désagréables au regard, mais présente au contraire un aspect uni plus séduisant.

## Revendications

1. Armature plane en un matériau rigide, apte à être conformée en une armature pour profilé en élastomère ou plastomère du type dit coulisse, cette armature plane ayant la forme générale d'une bande et étant **caractérisée en ce qu'**elle comprend :
- une partie pleine (2), non découpée en lamelles, contiguë à un bord longitudinal de la bande ;
- des premières lamelles (3) espacées de façon sensiblement régulière et faisant saillie latéralement par rapport à la partie pleine (2), perpendiculairement au bord longitudinal de celle-ci ;
- et au moins deux secondes lamelles (4) prolongeant latéralement chaque première lamelle (3) perpendiculairement au bord longitudinal de la partie pleine (2), ces secondes lamelles (3) étant espacées de façon sensiblement régulière les unes des autres.

2. Armature pour profilé en élastomère ou plastomère du type dit coulisse, destiné à équiper un encadrement de vitre coulissante d'un véhicule automobile, cette armature résultant d'un conformage de l'armature plane selon la revendication 1 et comportant, dans un plan perpendiculaire au bord libre de la partie pleine de cette armature plane, deux parties attenantes à sections transversales en U inversées l'une par rapport à l'autre, les deux parties ayant en commun une paroi qui constitue une branche de chacun des U, cette armature étant **caractérisée en ce que** l'autre branche de l'un des U est constituée par la partie pleine (2) de l'armature plane d'origine, les premières lamelles (3) attenantes à cette partie pleine (2) s'étendant à partir de la partie inférieure de cette branche suivant une portion au moins de la base du même U, tandis que les secondes lamelles (4) attenantes aux premières lamelles (3) s'étendent suivant le reste de cette base et suivant l'ensemble du second U.

3. Profilé du type dit coulisse pour véhicule automobile en élastomère ou en plastomère, dans lequel est noyée partiellement ou totalement l'armature selon la revendication 2, ce profilé comportant deux parties attenantes (5, 6) à sections transversales en U inversées, ayant en commun une paroi latérale correspondant à une branche de chaque U, l'une (5) de ces parties étant destinée à coiffer en le pinçant un bord saillant d'un encadrement de vitre coulissante du véhicule automobile, tandis que l'autre partie (6) est destinée à guider dans ses déplacements cette vitre coulissante et à assurer l'étanchéité en position de fermeture de celle-ci, ce profilé étant **caractérisé en ce qu'**à la paroi latérale (6a) correspondant à la branche du U visible de l'extérieur du véhicule de la partie (6) destinée à assurer le guidage de la vitre est associée la partie pleine (1) de l'armature, tandis qu'à une portion au moins de la base (6b) de cette même partie (6) sont associées les premières lamelles (3) de l'armature, les secondes lamelles (4) de celle-ci étant associées au reste de cette base et à la partie à section en U formant pince.

## Claims

1. A flat reinforcement of a rigid material, capable of being shaped into a reinforcement for an elastomer or plastomer profile of the "slideway" type, said flat reinforcement having the general form of a band and being **characterised in that** it comprises:
- a solid part (2), not cut into strips, contiguous with a longitudinal edge of the band;
- first strips (3) spaced substantially evenly and projecting laterally relative to the solid part (2), perpendicularly to the longitudinal edge thereof;
- and at least two second strips (4) laterally extending each first strip (3) perpendicularly to the longitudinal edge of the solid part (2), said second strips (3) being spaced substantially evenly relative to one another.

2. A reinforcement for an elastomer or plastomer profile of the "slideway" type intended to be fitted on the frame of a sliding window of an automotive vehicle, said reinforcement resulting from shaping of the flat reinforcement according to claim 1 and comprising, in a plane perpendicular to the free edge of the solid part of said flat reinforcement, two adjoining parts with U-shaped cross-sections which are inverted one with respect to the other, the two parts having in common a wall which constitutes a branch of each of the Us, said reinforcement being **characterised in that** the other branch of one of the Us is constituted by the solid part (2) of the original flat reinforcement, the first strips (3) adjoining this solid part (2) extending from the lower part of said branch along at least a portion of the base of the same U, while the second strips (4) adjoining the first strips (3) extend along the rest of said base and along the entirety of the second U.

3. A profile of the "slideway" type for an automotive vehicle, made of elastomer or plastomer, in which the reinforcement according to claim 2 is partially or totally embedded, said profile comprising two adjoining parts (5, 6) with inverted U-shaped cross-sections, having in common a lateral wall corresponding to a branch of each U, one (5) of these parts being intended to cover, by gripping, a projecting edge of the frame of a sliding window of the automotive vehicle, while the other part (6) is intended to guide said sliding window in its movements and to ensure sealing in the closed position thereof, said profile being **characterised in that** the lateral wall (6a) corresponding to the branch of the U visible on the outside of the vehicle of the part (6) intended to ensure guidance of the window is associated with the solid part (1) of the reinforcement, while at least one portion of the base (6b) of said same part (6) is associated with the first strips (3) of the reinforcement, the second strips (4) thereof being associated with the rest of said base and with the part of U-shaped section effecting gripping.

## Patentansprüche

1. Flache Armierung aus einem starren Material, geeignet, an eine Armierung für ein Profil aus Elastomer oder Plastomer des Kulisse genannten Typs angepasst zu werden, wobei die flache Armierung die allgemeine Form eines Bands hat und **dadurch gekennzeichnet ist, dass** sie enthält:
einen Vollabschnitt (2), der nicht in Lamellen ausgeschnitten ist, und der an den Längsrand des Bands angrenzend ist,
erste Lamellen (3), die auf im Wesentlichen regelmäßige Weise beabstandet sind und die mit Bezug auf den Vollabschnitt (2) senkrecht zu dessen Längsrand seitlich vorspringen, und
zumindest zwei zweite Lamellen (4), die seitlich jede erste Lamelle (3) senkrecht zu dem Längsrand des Vollabschnitts verlängern, wobei die zweiten Lamellen (3) auf im Wesentlichen regelmäßige Weise voneinander beabstandet sind.

2. Armierung für ein Profil aus Elastomer oder Plastomer des Kulisse genannten Typs, dazu bestimmt, einen Gleitscheibenrahmen eines Automobilfahrzeugs auszurüsten,
wobei diese Armierung aus einem Anpassen der flachen Armierung gemäß Anspruch 1 resultiert und in einer Ebene senkrecht zu dem freien Rand des Vollabschnitts der flachen Armierung zwei aneinandergrenzende Abschnitte mit relativ zueinander umgekehrten U-Querschnitten enthält,
wobei die zwei Abschnitte eine Wand gemeinsam haben, die einen Arm jedes U bildet,
wobei die Armierung **dadurch gekennzeichnet ist, dass**
der andere Arm des einen U durch den Vollabschnitt der ursprünglich flachen Armierung gebildet ist,
die an den Vollabschnitt (2) angrenzenden ersten Lamellen (3) sich von dem unteren Abschnitt dieses Arms aus über einen Abschnitt zumindest der Basis desselben U erstrecken,
während die an die ersten Lamellen (3) angrenzenden zweiten Lamellen (4) sich über den Rest dieser Basis und die Gesamtheit des zweiten U erstrecken.

3. Profil des Kulisse genannten Typs aus Elastomer oder Plastomer für ein Automobilfahrzeug, in das teilweise oder ganz die Armierung gemäß Anspruch 2 versenkt ist,
wobei das Profil zwei aneinandergrenzende Abschnitte (5, 6) mit umgekehrten U-Querschnitten enthält, die eine Seitenwand gemeinsam haben, die einem Arm jedes U entspricht,
wobei einer (5) dieser Abschnitte dazu bestimmt ist, einen vorspringenden Rand eines Gleitscheibenrahmes eines Automobilfahrzeugs zu krönen, indem er ihn einklemmt,
während der andere Abschnitt (6) dazu bestimmt ist, die Gleitscheibe bei ihren Bewegungen zu führen und die Dichte in deren geschlossener Stellung sicherzustellen,
wobei das Profil **dadurch gekennzeichnet ist, dass**
der Vollabschnitt (1) der Armierung der Seitenwand (6a), die dem von außerhalb des Fahrzeug sichtbaren Arm des U des zum Sicherstellen der Führung der Scheibe bestimmten Abschnitts (6) entspricht, zugeordnet ist, während
die ersten Lamellen (3) einem Abschnitt zumindest der Basis (6b) desselben Abschnitts (6) der Armierung zugeordnet sind und
deren zweite Lamellen (4) dem Rest dieser Basis und dem Abschnitt mit U-Querschnitt, der eine Klemme bildet, zugeordnet sind.
